# EUROPÄISCHE PATENTSCHRIFT

(11) **EP 1 165 227 B1**
(45) Veröffentlichungstag und Bekanntmachung des Hinweises auf die Patenterteilung: **18.08.2004**
(21) Anmeldenummer: 00920456.1
(22) Anmeldetag: 25.02.2000
(51) Int. Cl.: B01J 19/00, B01L 3/00

(54) **MIKROSÄULENREAKTOR**
MICROCOLUMN REACTOR
REACTEUR A MICROCOLONNES

(30) Priorität: 05.03.1999 DE 19910392
(43) Veröffentlichungstag der Anmeldung: 02.01.2002
(73) Patentinhaber: Clondiag Chip Technologies GmbH, 07743 Jena (DE)
(72) Erfinder: KÖHLER, Johann, Michael, D-07751 Golmsdorf (DE)
(74) Vertreter: Maiwald Patentanwalts GmbH
(86) Internationale Anmeldenummer: PCT/EP2000/001701
(87) Internationale Veröffentlichungsnummer: WO 2000/053308

(56) Entgegenhaltungen:
- WO-A-93/22053
- WO-A-96/03212
- US-A- 5 690 763

## Beschreibung

Die Erfindung betrifft einen Mikrosäulenreaktor zur Durchführung von Reaktionen an festen Phasen und/oder mit biologischen Zellen. Dabei kann der vorgeschlagene Mikrosäulenreaktor beispielsweise bei nachfolgenden Synthese- und Trennprozessen:
- Grignardreaktion und Herstellung anderer metallorganischer Verbindungen,
- Trocknen von Lösungsmitteln mit Hilfe metallischer oder oxidischer Trocknungsmittel,
- Ionenaustauschprozessen und
- der Extraktion von festen Phasen
vorteilhaft zur Anwendung gelangen. Insbesondere findet die Erfindung im Bereich von komplexen kombinatorisch-chemischen oder Screening-Operationen Anwendung oder um biologische Screening-Prozesse automatisiert durchführen zu können.

Probenpartikel ("Perlen", "Beads") werden seit Jahrzehnten für die Separation und Synthese im labortechnischen Bereich eingesetzt. Meistens handelt es sich dabei um Glas- oder Polymerkügelchen, welche Durchmesser von 0.01 mm bis 1 mm, typischerweise um die 0.1 mm, besitzen und trocken oder vorgequollen als loses Schüttgut in einen Behälter gefüllt und dann mit Flüssigkeit umspült werden, wobei zwischen der Festphasenoberfläche der Partikel und der sie umgebenden Flüssigkeit ein Adsorptions- oder Reaktionsprozeß abläuft. Verfahren der Säulenchromatographie (z.B. Gelfiltration), der Säulenextraktion, der Immundiagnostik, der Biomolekülreinigung (z.B. DNA-Reinigung) sowie der homogenen und heterogenen Synthese (von Oligonukleotiden, Peptiden oder kombinatorischen Substanzbibliotheken) nutzen diese Technik aus. Bei allen diesen Verfahren und Vorrichtungen ist eine feste Phase, an die Reaktionspartner angebunden sind, oder die als Reaktionsoberfläche dient, im Reaktionsgefäß während der Reaktion fest eingebunden. Die Prozesse werden durch eine Abfolge von einzelnen Binde- und Abspaltungsvorgängen geführt. Die Entfernung der stationär angeordneten festen Phase aus dem Reaktor ist während einer Betriebsserie derartiger Vorrichtungen nicht vorgesehen, nicht möglich oder sie ist zeitraubend und wenig praktikabel.

Der Erfindung liegt die Aufgabe zugrunde, für Synthese- und Trennprozesse an kleinen Probenvolumina, einen Mikrosäulenreaktor zu schaffen, mit Hilfe dessen, anstelle einer alternierenden Folge von Bindeund Elutionsprozessen an einer während einer Betriebsserie stationär eingebundenen Phase, ein Austausch der stationären Phase, z.B. nach Beladung, erfolgen kann, um etwa komplexe Stoffgemische oder auch Partikel und Zellen effizienter zu trennen und kombinatorische Synthesen leichter und schneller durchführen zu können.

Die Aufgabe wird durch die kennzeichnenden Merkmale des ersten Patentanspruchs gelöst. Vorteilhafte Ausgestaltungen sind durch die nachgeordneten Ansprüche erfaßt.
Das Wesen der Erfindung besteht darin, daß ein Mikrosäulenreaktor zur Durchführung von Reaktionen an festen Phasen und/oder mit biologischen Zellen geschaffen ist, der aus mindestens einem ersten und einem zweiten Substratplättchen besteht, die miteinander flächig verbunden sind, wobei in wenigstens eins der Substratplättchen wenigstens ein längserstreckter Kanal eingebracht ist, der in einem vorgebbaren Abschnitt seiner Länge von zwei Durchtrittsöffnungen, die in das gegenüberliegende Substratplättchen eingebracht sind, erfaßt ist, wobei die Durchtrittsöffnungen vom Kanal durch eine teildurchlässige siebartige Membran getrennt sind, deren Durchlaßbereiche so bemessen sind, daß sie in den Kanal eingebrachte Mikroperlen und/oder Zellen vorgebbar am Eintritt in die Durchtrittsöffnungen hindern, und daß der Kanal, außerhalb des durch die Durchtrittsöffnungen erfaßten Abschnitts, mit wenigstens zwei weiteren Öffnungen versehen ist, die ein Einbringen und/oder Verschieben der über dem Abschnitt vorgesehenen Mikroperlen und/oder Zellen durch Anlegen eines fluidischen Drucks ermöglichen und wenigstens eine der Durchtrittsöffnungen und eine der Öffnungen verschließbar sind.
Die Erfindung soll nachstehend anhand schematischer Ausführungsbeispiele näher erläutert werden. Es zeigen:
- Fig. 1: eine erste Ausführungsform eines Mikrosäulenreaktors mit seinen funktionsbestimmenden Baugruppen in einer Explosionsdarstellung,
- Fig. 2: eine zweite Ausführungsform eines Mikrosäulenreaktors mit seinen funktionsbestimmenden Baugruppen in einer Explosionsdarstellung,
- Fig. 2a: eine andere Art der Verbindung von Durchtrittsöffnungen mit zu- bzw. abführenden Kanälen,
- Fig. 3: einen Längsteilschnitt durch eine Ausführungsform nach Fig. 1 oder Fig. 2,
- Fig. 4 und 5: mögliche Anordnungsformen mehrerer Mikrosäulenreaktoren,
- Fig. 6: eine beispielhafte Verschaltung mehrere Mikrosäulenreaktoren zur Synthese einer speziellen Substanzbibliothek in einem Blockschema und
- Fig. 7a-d: eine weitere Ausführungsform eines Mikrosäulenreaktors in verschiedenen Fertigungsschritten.

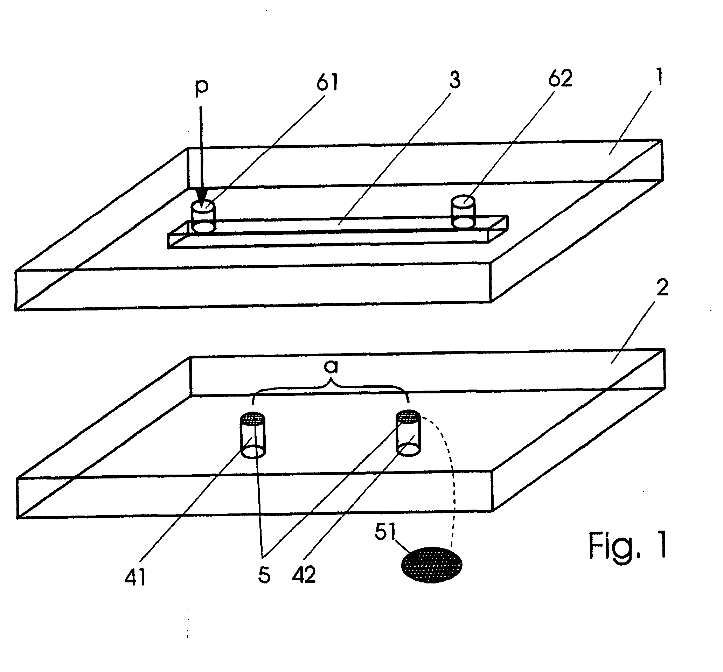

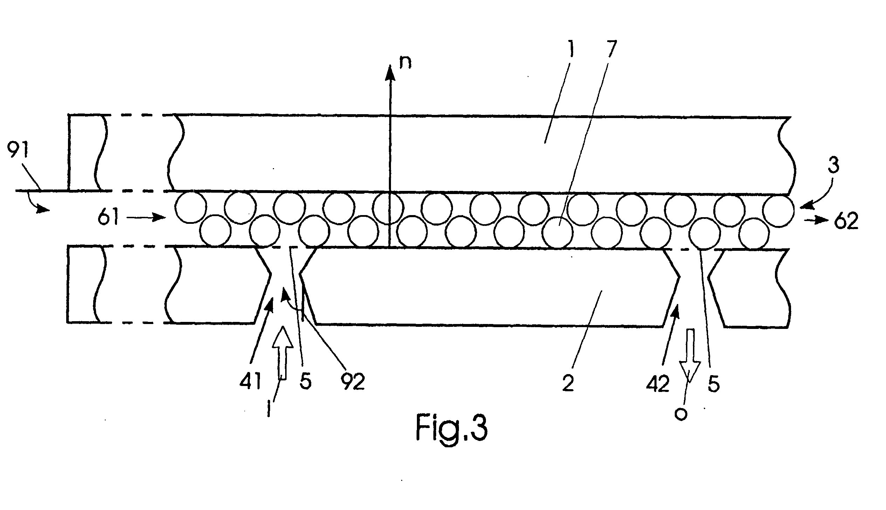

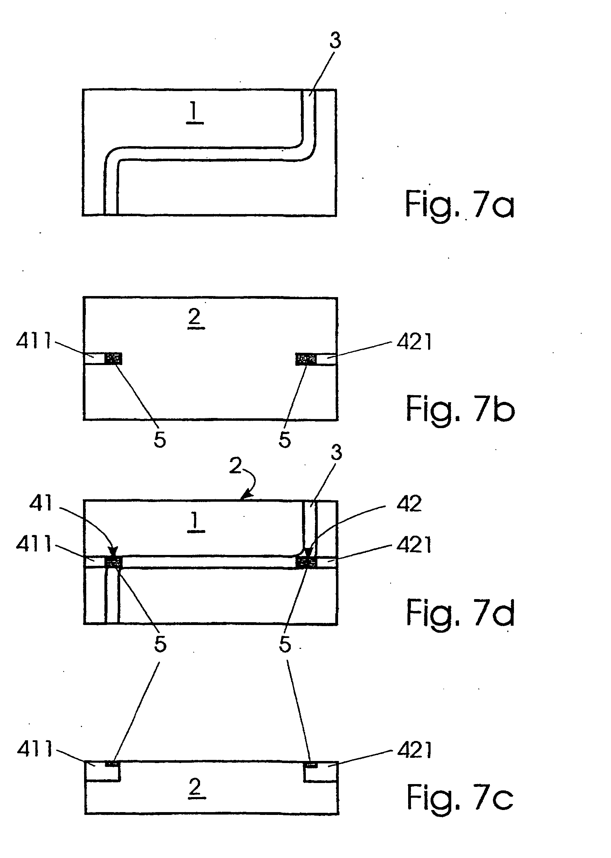

In Figur 1 ist 1 eine erste Ausführungsform eines Mikrosäulenreaktors mit seinen funktionsbestimmenden Baugruppen in einer Explosionsdarstellung dargestellt. Nach Fig. 1 besteht der Mikrosäulenreaktor aus zwei Substratplättchen 1, 2, wobei im Beispiel in das erste Substratplättchen 1, hier bestehend aus Glas, mit den Abmessungen 15 mm · 8 mm · 1 mm, ein längserstreckter Kanal 3 eingebracht ist, dem eine Breite von 1 mm, eine Tiefe von 100 µm und eine Länge von 10 mm gegeben ist. Dieser Kanal ist durch zwei Öffnungen 61, 62, hier Bohrungen, mit zwei nicht dargestellten Fluidanschlüssen verbunden. Für das zweite Substratplättchen 2 ist im Beispiel ein Siliziumwafer mit den Abmessungen 15 mm · 8 mm · 0.5 mm gewählt, in welches zwei Durchtrittsöffnungen 41, 42 derart eingearbeitet sind, daß sie bei paßgenauer Positionierung zum Glasplättchen 1 einen Abschnitt a erfassen, der im Beispiel über den Endbereichen des Kanals 3 zu liegen kommt. Die Durchtrittsöffnungen 41, 42 sind mit einer teildurchlässigen siebartigen Membran, hier in Form einer Siliziumoxinitridporenmembran überspannt. Die Dicke der Membran beträgt im Beispiel 2 µm und die Durchlaßbereiche 51 der Membran weisen Poren mit Durchmessern von 5 µm auf Je nach Einsatzfall und der zum Einsatz gelangenden Mikroperlen 6 können die konkreten Größen der Durchlaßbereiche 51 variabel vorgebbar festgelegt werden. Die Porenmembran dient dem Zurückhalten der in den Kanal 3 einzubringenden Partikel oder Zellen 7. Ebenso kann im Rahmen der Erfindung, je nach Einsatz des Milarosäulenreaktors, die Membran (5) durch eine nanoporöse Dünnschichtmembran gebildet sein, deren Porengrößen in einem Bereich zwischen 5 ... 500 nm festgelegt sind.
Soll den Durchtrittsöffnungen 41, 42 eine Struktur gegeben werden, wie sie in Fig. 3 angedeutet ist, bei der die Durchtrittsöffnungen durch zwei an ihren schmalen Basisflächen aufeinanderstehende pyramidenstumpffönnige Kanalbereiche parallel zur Flächennormalen n des zweiten Substratplättchens 2 gebildet ist, setzt man für das Substratplättchen 2 einen Si(100)-Wafer ein, der beidseitig mit einer geeigneten Ätzmaske (z.B. Si-Oxinitrid) versehen ist. Diese Maske bildet an der Vorderseite ein Array von Mikrofenstern, deren Abmessungen die Porenweite festlegen. Typischerweise wird eine Porenweite von 5 µm realisiert. Diese ist bequem mit herkömmlichen Mitteln der Fotolithografie und Ätztechnik herstellbar. Mittig zu dieser Porenstruktur werden von der Rückseite des Si-Wafers zwei Fenster so strukturiert, daß beim Ätzen von beiden Seiten zwei pyramidenstrunpfförmige Kanäle entstehen, die an ihrer dem ersten Substratplättchen 1 zugewandten Oberfläche durch Siebböden verschlossen sind.
Sollen mit den Durchtrittsöffnungen 41, 42 gleichzeitig Kanalstrukturen zur Fluidkontaktierung der mobilen Phase innerhalb der Substratebene des Substratplättchens 2 erzeugt werden, so daß die Anschlüsse 41, 42 bspw. seitlich an den Stirnseiten aus dem Mikrosäulenreaktor herausgeführt sind, ist für das Substratplättchen im Beispiel ein Si-Wafer (in 100-Orientierung für geneigte Kanalwände oder in 110-Orientierung für senkrechte Kanalwände) eingesetzt, der mit einer Siebporenmebranmaskenstruktur 5 versehen ist, die im Bereich des weiter verlaufenden Kanals 411, 412 durch ein der Kanalweite entsprechendes Fenster, das bis zum Chiprand reicht, begleitet wird (vgl. Fig. 7a-d). Die Rückseite des Si-Wafers bleibt völlig von einer ätzresistenten Schutzschicht (z.B. Si₃N₄) bedeckt. Zunächst wird der Si-Wafer mit einem isotrop wirkenden Ätzbad (z.B. auf HF-Basis) so geätzt, daß die Stege zwischen den Einzelporen der Siebstrukturmaske vollständig unterätzt werden. Anschließend wird mit einem anisotropen Ätzbad (z.B. auf KOH-Basis) weitergeätzt, um die geneigten bzw. senkrechten Kanalkanten zu erhalten. Die Figuren 7a-d zeigen das Ergebnis vorstehend beschriebenen Vorgehens anhand einer beispielhaften Struktur. Dabei ist aus Fig. 7a ein in das erste Substratplättchen 1 eingebrachter Kanal 3 ersichtlich. Fig. 7b zeigt die in das zweite Substratplättchen eingebrachte Struktur mit den zum Substratrand verlängert ausgebildeten Kanalabschnitten 411 und 421, wobei Fig. 7c die Verhältnisse nach Fig. 7b im seitlichen Schnitt darstellt und Fig. 7d verdeutlicht in transparenter Darstellung in Draufsicht die Orientierung der einzelnen genannten Teile zueinander, wenn das erste und zweite Substratplättchen miteinander verbunden sind.
Die zur Fig. 1 beschriebenen ersten und zweiten Substratplättchen (1, 2) werden nach Herstellung der beschriebenen Strukturen miteinander durch anodisches Bonden verbunden.

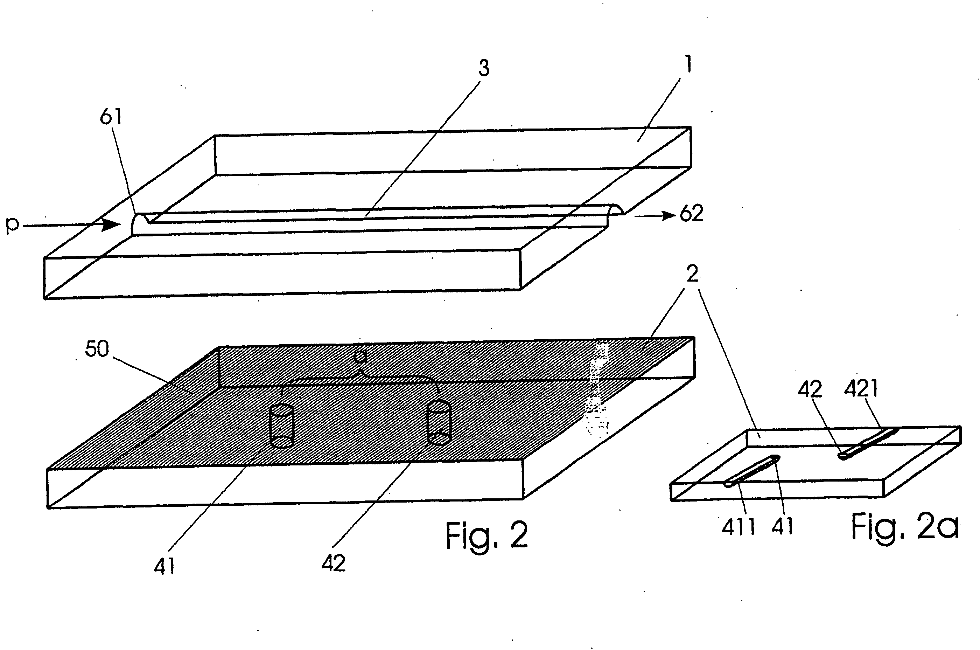

Die zuvor beschriebenen speziellen Ausführungsformen sind besonders vorteilhaft mit herkömmlichen Bearbeitungsschritten eingeführter Mikrostrukturierungstechniken herstellbar, beschränken die Erfindung jedoch nicht darauf. Ebenso können für das erste und/oder zweite Substratplättchen 1, 2 ein Glasplättchen und/oder ein Plättchen aus einem Kunststoff gewählt sein, wobei der Kanal 3 in das erste Substratplättchen 1 eingebracht ist und die dem ersten Substratplättchen 1 zugewandte Oberfläche des zweiten Substratplättchens 2 durchgängig mit einer Membran überzogen ist, in die zumindest im Bereich der Durchtrittsöffnungen 41, 42 eine mikrostrukturierte Perforation zur Bildung der Durchlaßbereiche 51 eingebracht ist. Insbesondere kann hier das zweite Substratplättchen 2 mit einer das Substratplättchen überspannenden perforierten Polymerfolie 50 versehen sein, wie es in Fig. 2 schematisch angedeutet ist. Auch eine solche Ausführung läßt andere Kanalführungen zu, wie es in Fig. 2a anhand einer beispielhaften Kanalführung 411, 421 im Substratplättchen 2 angedeutet ist.

In Figur 3 ist ein Längsteilschnitt durch eine der bislang beschriebenen Ausführungsformen nach Fig. 1 oder Fig. 2 dargestellt. Dabei ist ersichtlich, wie der Kanal 3 im zusammengefügten Zustand der Substratplättchen 1, 2 mit der festen Phase, hier in Form von Mikroperlen 7 verfüllt ist. Bei vorliegendem Vorschlag ist es nicht erforderlich, extreme Packungsdichten der stationären Phase 7 zu erreichen. Wichtig ist nur, daß die Abstände zwischen den Partikeln der stationären Phase 7 so bemessen sind, daß während der Verweilzeit eines Moleküls im Reaktorraum, worunter hier der durch die Durchtrittsöffnungen 41, 42 erfaßte Abschnitt des Kanals 3 zu verstehen ist, ein genügend häufiger Kontakt mit der stationären Phase stattfindet. Das sollte bereits bei Partikelgrößen im mittleren bis unteren Mikrometerbereich bei Verweilzeiten von weniger als einer Sekunde, z.T. im unteren Millisekundenbereich, gegeben sein. Die Festlegung der Partikelgrößen und/oder der zurückzuhaltenden oder durchzulassenden Zellen erfolgt in Abhängigkeit von der vorgegebenen konkreten Aufgabenstellung und der daraufhin anzupassenden Porengröße der teildurchlässigen siebartigen Membran 5, die so festzulegen ist, daß ein Verstopfen der Poren ausgeschlossen ist. In Fig. 3 ist weiterhin schematisch angedeutet, daß die einzelnen Flußwege im dargestellten einzelne Mikrosäulenreaktor mit Hilfe von mindestens zwei Ventilen 91, 92 wahlweise verschließbar sind. Optional können auch die Öffnungen 42, 62 mit jeweils einem weiteren, in Fig. 3 nicht dargestellten Ventil verschließbar sein. Dadurch ist eine wahlfreie Adressierung der beiden Zu- 61, 41 und der beiden Abläufe 42, 62 des Mikrosäulenreaktors ermöglicht. Damit liegt ein Mikrosäulenreaktor vor, bei dem nicht nur die mobile Phase, z.B. eine homogene Flüssigkeit, deren Flußweg in Fig. 3 durch Pfeile i und o angedeutet ist, sondern auch die stationäre Phase, hier die Mikroperlen 7, bewegt werden kann. Durch Verschließen jeweils eines Zu- oder Abflusses läßt sich nun wahlweise nur die mobile Phase oder aber auch die stationäre Phase 7 als Suspension transportieren. Dadurch wird ein rascher Austausch von Trennmaterial möglich und es lassen sich durch Kombination mehrerer der beschriebenen Mikroreaktoren sogar Festphasentrenn- und Syntheselogiken aufbauen. Es können somit, aufgrund der mikrofluidischen Trennung von mobiler und stationärer Phase, auch spezifische Binde- und Abspaltprozesse durchgeführt werden, die weiter nachstehend beschrieben werden sollen.

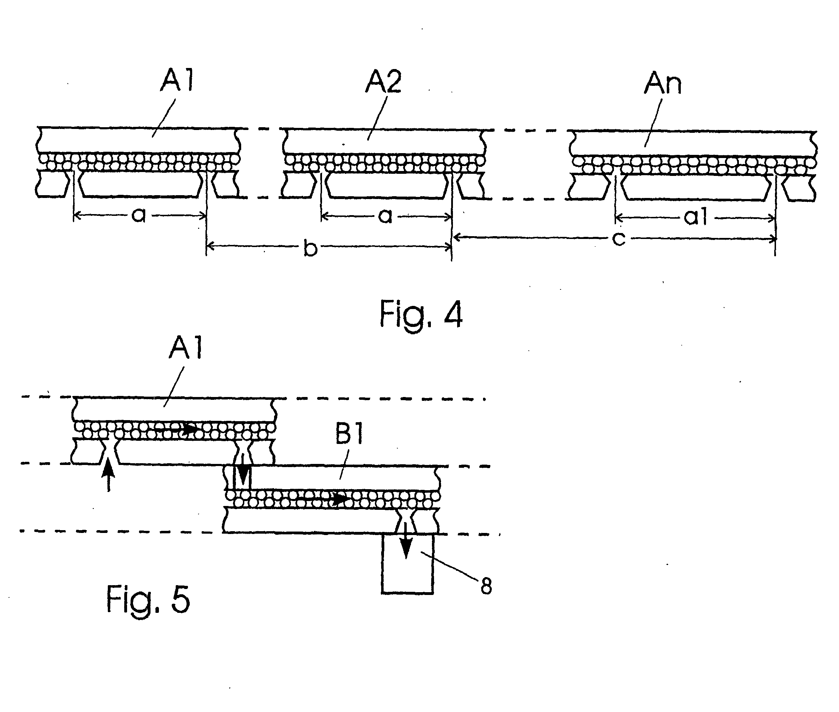

In den Figuren 4 und 5 sind mögliche Anordnungsforinen mehrerer Mikrosäulenreaktoren schematisch angedeutet. Je nach Ausführung können dabei die Mikrosäulenreaktoren diskret, analog zu den Figuren 1 und 2, ausgeführt und miteinander in Verbindung gebracht sein, oder wie in den Figuren 4 und 5 dargestellt, können mehrere solcher Mikrosäulenreaktoren linear (Fig.4) jeweils eines ersten und zweiten Substratplättchens sein, oder es können auch mehrere solcher Mikrosäulenreaktoren in unterschiedlichen Ebenen (Fig. 5) miteinander in Verbindung gebracht sein, wobei jeweils eine Ebene analog zu Fig. 4 ausgeführt sein kann. Je nach vorzugebenden Reaktionsablauf können die eigentlichen Reaktorabschnitte, bestimmt durch die Länge des Abschnitts a, durch die der den Kanal 3 durch die Durchtrittsöffnungen 41, 42 erfaßt ist, zueinander in einem äquidistanten Abstand b oder in einem variabel festlegbaren Abstand c angeordnet sein. Ebenso ist es möglich, die Abstände der Durchtrittsöffnungen 41, 42 von Reaktor zu Reaktor in ihrer Länge unterschiedlich festzulegen, vgl. Fig. 4, Abstände a und a1. Vorgenannte Möglichkeiten sind einzig durch die mit den Mikrosäulenreaktoren durchzuführende Reaktion bestimmt. Weitere, insbesondere ebenfalls in Mikrosystemtechnik ausgeführte Baugruppen, wie bspw. optische Detektoren, Analyseeinheiten, Kalorimeter, elektrochemische Detektoren etc., können in die Zusammenschaltung mehrerer Mikrosäulenreaktoren eingebunden sein, wie es in Fig. 5 durch eine derartige Baugruppe 8 lediglich schematisch angedeutet ist.

Der vorgeschlagene Mikrosäulenreaktor und sein mehrfacher Einsatz durch Zusammenschaltung mehrere einzelner Mikrosäulenreaktoren eignet sich insbesondere für die Durchführung von automatisierten Prozessen der Wirkstoffentwicklung mittels beadgebundener Festphasensynthese. Mehrere solche Mikrosäulenreaktoren können auch untereinander und mittels vorzusehender Ventile zu Fluidlogiken zusammengeschaltet werden, um z.B. komplexere kombinatorisch-chemische oder Screening-Operationen mikroautomatisiert durchführen zu können. Speziell für biologische Screening-Prozesse können anstelle der in Fig.3 angedeuteten Mikroperlen auch Zellen in das System eingebracht werden. Der Reaktor eignet sich auch für die mikromodulare Kombination mit Mikrodurchflußküvetten für mikrophotometrische, mikrofluorimetrische oder mikrochemoluminometrische Messungen.
Der vorgeschlagene Mikrosäulenreaktor läßt ein Nachschieben neuer Reaktionspartner (Mikroperlen und/oder Zellen) durch den Kanal 3 durch Anlegen eines fluidischen Drucks p zu, so daß eine weitere Variabilität der Gesamtvorrichtung bei gleichzeitig geringst möglichem Totvolumen gegeben ist.

Die dargestellten vorteilhaften Einsatzmöglichkeiten sollen anhand nachfolgender Ausführungsbeispiele detaillierter angedeutet werden.

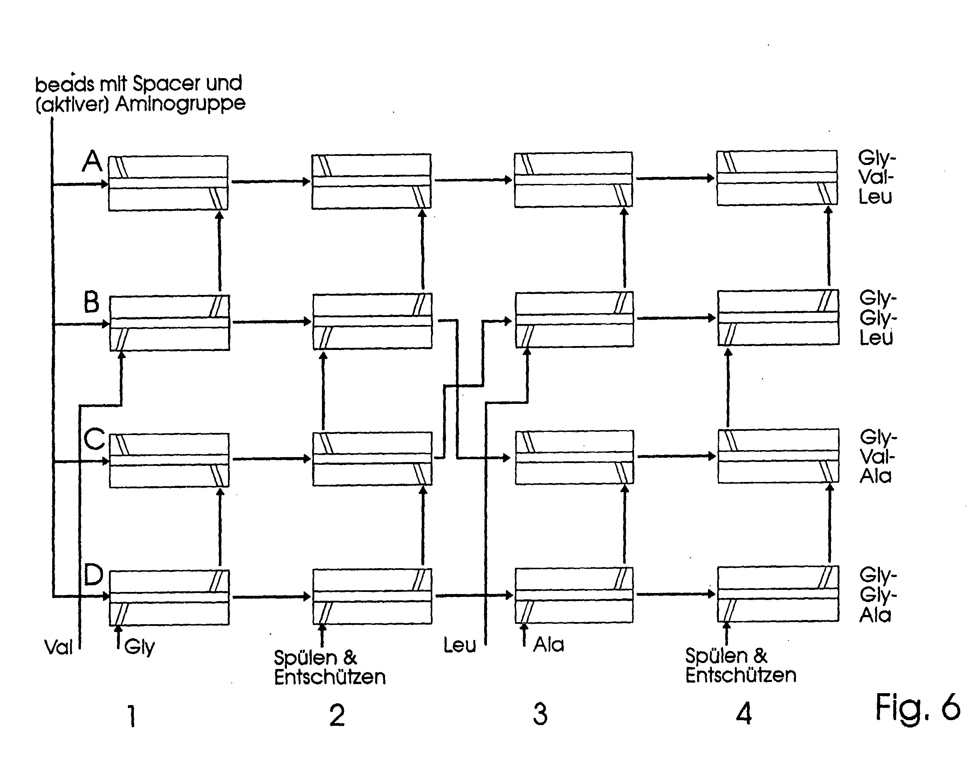

Zunächst soll die Synthese einer Bibliothek der 4 Tripetide Gly-Val-Leu, Gly-Gly-Leu, Gly-Val-Ala und Gly-Gly-Ala in einem Mikroreaktorfluidsystem beschrieben werden.
Zum Einsatz kommt im Beispiel ein System mit 16 Mikroreaktorsäulen, die fluidisch, wie in Fig. 6 angedeutet, verschaltet sind. Zunächst werden die Mikroreaktoren A1 und B1, sowie C1 und D1 mit Mikroperlen in Form von Polystyrol-Synthesebeads beladen, an deren Oberfläche die Aminosäure Glycin über eine Esterbindung zu einer Benzylgruppe als Spacer angekoppelt ist. Die vier Mikrosäulenreaktoren werden nach Sperrung der Fluidkanäle für die stationären Phasen (beads) durch die mit Siebböden ausgestatteten Zu- und Abführungen der Kanäle für die mobilen Phasen paarweise (A/B) mit einer 1:1 gemischten warmen Lösung von Dicyclohexylcarbodiimid und Valin, bzw. (C/D) mit einer 1:1 gemischten warmen Lösung von Dicyclohexylcarbodiimid und Glycin bespült. Die Aminogruppen der zugeführten Aminosäuren sind dabei durch tertiär-Butyloxycarbonylgruppen geschützt. Nach dem ersten Spülschritt werden alle stationäre Phasen in die Modulreihe 2 durch jeweiliges Anlegen eines fluidischen Drucks weiterbefördert und dort durch die in Reihe geschalteten Kanäle für die mobilen Phasen gespült und durch Durchleiten von leicht wasserhaltiger Trifluoressigsäure entschützt. Anschließend werden die fluidischen Phasen in die Modulgruppe 3 befördert, wobei die stationäre Phase von B2 nach C3 und die von C2 nach B3 geführt wird. In der Modulreihe 3 vollzieht sich analog zur Modulreihe 1 die Umsetzung mit geschützten Aminosäuren, wobei jetzt anstelle von Valin Leucin und anstelle von Glycin Alanin zugeführt werden. Nach dieser Operation und einem ersten Spülschritt werden die stationären Phasen in die Modulreihe 4 befördert und dort die Schutzgruppen abgespalten. Die vier Gruppen von Synthesebeads werden anschließend in separaten Ausgängen entnommen und zur Freisetzung der Tripeptide die Benzylesterbindungen gespalten.

In einem weiteren Anwendungsbeispiel soll die Herstellung von Ethylgrignard aus Ethylchlorid für Mikrofluidsynthesen beschrieben werden.
Als stationäre Phase wird zunächst eine Suspension von Magnesiumpulver in trocknem Ethylether in einen Mikrosäulenreaktor eingetragen. Nach Sperrung des Kanals für diese stationäre Phase wird über die Zu- und Abführung für die mobile Phase der Ether durch eine warme Lösung von Ethylchlorid in Ether verdrängt. Am Ablauf der mobilen Phase wird der Ethylgrignard als Etherlösung entnommen.

Der Mikrosäulenreaktor kann wie eine Chip-Kartusche auch für die Bereitstellung von nahezu beliebigen Grignards und anderen metallorganischen Verbindungen für Mikrofluidsynthesen im Chipformat eingesetzt werden. Das System ist besonders vorteilhaft, da die Lösungen leicht wasser- und sauerstofffrei gehalten werden können (z.B. im Gegensatz zu Mikrotiterplatten und Nanotiterplatten) und aufgrund des geringen Reaktionsvolumens kann die freiwerdende Reaktionswärme leicht abgeführt werden, und es kann dadurch nicht zu einem gefährlichen Überhitzen des Reaktors kommen.

Entsprechend der eingangs geschilderten Anwendungsmöglichkeiten, läßt sich der vorgeschlagene Mikrosäulenreaktor in vielfältiger Weise vorteilhaft einsetzen.

### Bezugszeichenliste

- 1 -: erstes Substratplättchen
- 2 -: zweites Substratplättchen
- 3 -: Kanal
- 41, 42 -: Durchtrittsöffnungen
- 411, 421 -: Kanalabschnitte im zweiten Substratplättchen
- 5 -: teildurchlässige siebartige Membran
- 50 -: Polymerfolie
- 51 -: Durchlaßbereiche (Poren)
- 61, 62 -: Öffnungen im ersten Substratplättchen
- 7 -: Mikroperlen und/oder Zellen
- 8 -: Baugruppen, wie wie bspw. optische Detektoren, Analyseeinheiten, Kalorimeter, elektrochemische Detektoren etc
- 91,92 -: Ventile
- a, a1 -: durch die Durchtrittsöffnungen erfaßter Abschnitt
- b -: äquidistante Abstände zwischen zusammengehörigen Durchtrittsöffnungen
- c -: unterschiedliche Abstände zwischen zusammengehörigen Durchtrittsöffnungen
- i -: Zufluß für die mobile Phase
- o -: Abfluß für die mobile Phase
- n -: Flächennormale
- p -: fluidischer Druck
- A1 bis D4 -: Mikrosäulenreaktoren

## Patentansprüche

1. Mikrosäulenreaktor zur Durchführung von Reaktionen an festen Phasen und/oder mit biologischen Zellen, bestehend aus mindestens einem ersten und einem zweiten Substratplättchen (1; 2), die miteinander flächig verbunden sind, wobei in wenigstens eins der Substratplättchen (1; 2) wenigstens ein längserstreckter Kanal (3) eingebracht ist, der in einem vorgebbaren Abschnitt (a) seiner Länge von zwei durch das Substratplättchen geführte Öffnungen (41, 42), erfaßt ist, **dadurch gekennzeichnet, daß** die Durchtrittsöffnungen (41, 42) vom Kanal (3) durch eine teildurchlässige siebartige Membran (5; 50) getrennt sind, deren Durchlaßbereiche (51) so bemessen sind, daß sie in den Kanal (3) eingebrachte Mikroperlen und/oder Zellen (7) vorgebbar am Eintritt in die Durchtrittsöffnungen (41, 42) hindern, und daß der Kanal (3), außerhalb des durch die Durchtrittsöffnungen (41, 42) erfaßten Abschnitts (a), mit wenigstens zwei weiteren Öffnungen (61, 62) versehen ist, die ein Einbringen und/oder Verschieben der über dem Abschnitt (a) vorgesehenen Mikroperlen und/oder Zellen (7) durch Anlegen eines fluidischen Drucks (p) ermöglichen und Mittel (91, 92) zum zeitweisen Verschluß wenigstens einer der Durchtrittsöffnungen (41, 42) und einer der Öffnungen (61, 62) vorgesehen sind.

2. Mikrosäulenreaktor nach Anspruch 1, **dadurch gekennzeichnet, daß** für das erste Substratplättchen (1) ein Glas und für das zweite Substratplättchen (2) eine Siliziumwafer gewählt ist, wobei der Kanal (3) in das Glasplättchen (1) eingebracht ist und die dem Glasplättchen zugewandte Oberfläche des Siliziumwafers (2) durchgängig mit einer Beschichtung versehen ist, in die zumindest im Bereich der Durchtrittsöffnungen (41, 42) eine mikrostrukturierte Perforation zur Bildung der Durchlaßbereiche (51) eingebracht ist.

3. Mikrosäulenreaktor nach Anspruch 1, **dadurch gekennzeichnet, daß** für das erste und/oder zweite Substratplättchen (1, 2) ein Glasplättchen und/oder ein Plättchen aus einem Kunststoff gewählt ist, wobei der Kanal (3) in das erste Substratplättchen (1) eingebracht ist und die dem ersten Substratplättchen (1) zugewandte Oberfläche des zweiten Substratplättchens (2) durchgängig mit einer Membran überzogen ist, in die zumindest im Bereich der Durchtrittsöffnungen (41, 42) eine mikrostrukturierte Perforation zur Bildung der Durchlaßbereiche (51) eingebracht ist.

4. Mikrosäulenreaktor nach Anspruch 3, **dadurch gekennzeichnet, daß** die Membran durch eine das zweite Substratplättchen (2) überspannende perforierte Polymerfolie (50) gebildet ist.

5. Mikrosäulenreaktor nach Anspruch 2, **dadurch gekennzeichnet, daß** das erste und zweite Substratplättchen (1, 2) miteinander durch anodisches Bonden verbunden sind.

6. Mikrosäulenreaktor nach Anspruch 2 oder 3, **dadurch gekennzeichnet, daß** das erste und zweite Substratplättchen (1, 2) miteinander außerhalb des Bereichs des Kanals (3) durch Verklebung verbunden sind.

7. Mikrosäulenreaktor nach Anspruch 3, **dadurch gekennzeichnet, daß** das erste und zweite Substratplättchen (1, 2) miteinander durch äußere Spannmittel verbunden sind.

8. Mikrosäulenreaktor nach Anspruch 1, 2 oder 3, **dadurch gekennzeichnet, daß** die Durchlaßöffnungen (41, 42) jeweils mit einem in der Ebene des zweiten Substratplättchens (2) liegenden und zu einem Substratrand geführten Kanal (411, 421) verbunden sind.

9. Mikrosäulenreaktor nach einem der vorstehenden Ansprüche, **dadurch gekennzeichnet, daß** ein Kanal (3) von mehreren Durchtrittsöffnungen (41, 42) erfaßt ist, wobei jeweils zusammengehöhrige, einen Zu- (i) und Abfluß (o) bildende Durchtrittsöffnungen und jeweils einen Abschnitt (a) des Kanals (3) erfassende Durchtrittsöffnungen zueinander in einem äquidistanten (b) oder in variablen unterschiedlichen Abständen (c) angeordnet sind.

10. Mikrosäulenreaktor nach Anspruch 9, **dadurch gekennzeichnet, daß** beim Vorsehen mehrerer zusammengehöriger Durchtrittsöffnungen (41, 42) auf einem gemeinsamen Substrat, oder bei fluidischer Verschaltung mehrerer diskreter Mikrosäulenreaktoren, der jeweilige Abstand (a; a1) der zusammengehörigen, einen Zu- und Abfluß bildenden Durchtrittsöffnungen, dem jeweiligen Reaktionsprozeß angepaßt, unterschiedlich lang ausgeführt ist.

11. Mikrosäulenreaktor nach Anspruch 1, **dadurch gekennzeichnet, daß** mehrere, jeweils einen Kanal (3) und zwei Durchtrittsöffnungen (41, 42) aufweisende Substratplättchen linear und/oder in mehreren Ebenen als jeweils separate Bauelemente miteinander fluidisch verschaltet sind, wobei an vorgebbaren Verbindungsstellen weitere Baugruppen (8), ausgewählt aus optischen Detektoren, Analyseeinheiten, Kalorimetern elektrochemischen Detektoren , vorgesehen sind.

12. Mikrosäulenreaktor nach Anspruch 1, **dadurch gekennzeichnet, daß** mehrere, jeweils einen Kanal (3) und zwei Durchtrittsöffnungen (41, 42) aufweisende Substratplättchen linear und/oder in mehreren Ebenen als jeweils separate Bauelemente miteinander fluidisch verschaltet sind, wobei an vorgebbaren Verbindungsstellen weitere mikrostrukturierte Baugruppen (8), ausgewählt aus optischen Detcktoren, Analyseeinheiten, Kalorimetern, elektrochemischen Detektoren in die Gesamtanordnung integriert eingebracht sind.

13. Mikrosäulenreaktor nach Anspruch 1 und 2, **dadurch gekennzeichnet, daß** die Durchtrittsöffnungen (41, 42) parallel zur Flächennormalen (n) in Form von zwei an ihren schmalen Basisflächen aufeinanderstehenden pyramidenstumpfförmigen Kanalbereichen gebildet sind, wobei für das zweite Substratplättchen 2 ein beidseits mit einer Ätzmaske versehenes Si(100)-Wafer eingesetzt ist, deren erste Maskenfläche zumindest über den Durchtrittsöffnungen (41, 42) mit Durchlaßbereichen (51) versehen ist und die auf der gegenüberliegenden Waferfläche aufgebrachte zweite Maskenfläche mit Ausnehmungen versehen ist, deren Öffnungen dem kleinsten lichten Öffnungsquerschnitt der Durchtrittsöffnungen (41,42) entspricht.

14. Mikrosäulenreaktor nach Anspruch 1, 2 und 8, **dadurch gekennzeichnet, daß** für das zweite Substratplättchen ein Si-Wafer mit 100-, oder 110-Orientierung eingesetzt ist, der einerseits mit einer Siebporenmebranmaskenstruktur 5 versehen ist, die im Bereich des weiter verlaufenden Kanals (411, 412)durch ein der Kanalweite entsprechendes Fenster, das bis zum Chiprand reicht, begleitet wird und die gegenüberliegende Seite des Si-Wafers vollständig von einer ätzresistenten Schutzschicht, bedeckt ist.

15. Mikrosäulenreaktor nach Anspruch 1, **dadurch gekennzeichnet, daß** die Membran (5) durch eine nanoporöse Dünnschichtmembran gebildet ist, deren Porengrößen in einem Bereich zwischen 5 ... 500 nm festgelegt sind.

## Claims

1. A microcolumn reactor for carrying out reactions on solid phases and/or biological cells comprising at least one first and one second substrate wafer (1; 2) which are connected to one another across their surfaces, wherein at least one longitudinally extending channel (3) is inserted into at least one of said substrate wafers (1; 2), said channel comprising in a preselectable section (a) of its length two passage openings (41, 42), which are passed through the substrate wafer, **characterized in that** the passage openings (41, 42) are separated from the channel (3) by a partially permeable sieve-like membrane (5; 50), whose transmission areas (51) are dimensioned in such a manner as to preselectably prevent micro-beads and/or cells (7) introduced into the channel (3) from entering the passage openings (41, 42), and **in that** the channel (3) is provided with at least two further openings (61, 62) outside of the section (a) that is comprised by said passage openings (41, 42), said at least two further openings (61, 62) allow the micro-beads and/or cells (7) that are provided above the section (a) to be introduced and/or displaced by applying a fluid pressure (p), and further comprising means (91, 92) for temporarily closing at least one of the passage openings (41, 42) and one of the openings (61, 62).

2. The microcolumn reactor according to claim 1, **characterized in that** a glass is selected for the first substrate wafer (1) and a silicon wafer is selected for the second substrate wafer (2), wherein the channel (3) is inserted into the glass wafer (1) and wherein the surface of the silicon wafer (2) opposing said glass wafer is entirely covered by a layer into which a micro-structured perforation for forming the transmission areas (51) is provided at least in the area of the passage openings (41, 42).

3. The microcolumn reactor according to claim 1, **characterized in that** a glass wafer and/or a wafer made of synthetic material is selected for the first and/or for the second substrate wafer (1, 2), the channel (3) being inserted into the first substrate wafer (1) and the surface of the second substrate wafer (2) opposing the first substrate wafer (1) is entirely covered by a membrane into which a micro-structured perforation for forming the transmission areas (51) is provided at least in the area of the passage openings (41, 42).

4. The microcolumn reactor according to claim 3, **characterized in that** the membrane is formed by a perforated polymeric foil (50) covering the second substrate wafer (2).

5. The microcolumn reactor according to claim 2, **characterized in that** the first and the second substrate wafers (1, 2) are connected to one another by anodic bonding.

6. The microcolumn reactor according to claim 2 or 3, **characterized in that** the first and the second substrate wafers (1, 2) are connected to one another outside of the area of the channel (3) by bonding.

7. The microcolumn reactor according to claim 3, **characterized in that** the first and the second substrate wafers (1, 2) are connected to one another by external tightening means.

8. The microcolumn reactor according to claim 1, 2 or 3, **characterized in that** the passage openings (41,42) are each connected to a channel (411, 421 ) that is arranged in the plane of the second substrate wafer (2) and extends to the rim of a substrate.

9. The microcolumn reactor according to any of the preceding claims, **characterized in that** a channel (3) is defined by a plurality of passage openings (41, 42), wherein respectively mating passage openings, which constitute an inlet (i) and an outlet (o), and passage openings, each defining a section (a) of the channel (3), are arranged to one another equidistantly (b) or in variable, different distances (c).

10. The microcolumn reactor according to claim 9, **characterized in that**, when a plurality of mating passage openings (41, 42) are provided on a common substrate or when a plurality of discrete microcolumn reactors are fluidically interconnected, the respective distances (a; a1) of the mating passage openings which form an inlet and an outlet are dimensioned in different length, adapted to the actual reaction process.

11. The microcolumn reactor according to claim 1, **characterized in that** a plurality of substrate wafers, each having a channel (3) and two passage openings (41, 42), are linearly and/or in a plurality of planes fluidically interconnected with one another as separate units, wherein further structural components (8) selected from optical detectors, analysis units, calorimeters, electrochemical detectors are provided at preselectable connection sites.

12. The microcolumn reactor according to claim 1, **characterized in that** a plurality of substrate wafers, each having a channel (3) and two passage openings (41, 42), are linearly and/or in a plurality of planes fluidically interconnected with one another as separate units, wherein further micro-structured components (8) selected from optical detectors, analysis units, calorimeters, electrochemical detectors are provided integrated in the overall arrangement.

13. The microcolumn reactor according to claims 1 and 2, **characterized in that** the passage openings (41, 42) are, in parallel to the surface normal (n), formed by two channel sections in the shape of two truncated pyramids standing via their small base faces on top of each other, wherein an Si(100)-wafer is used for the second substrate wafer 2 which on both of its sides is provided with an etching mask, a first masking face of which is provided with transmission areas (51) at least across the passage openings (41, 42), and the second masking face disposed on the opposing wafer face is provided with recesses, the openings of which correspond to the smallest inside cross section of the passage openings (41, 42).

14. The microcolumn reactor according to claims 1, 2 and 8, **characterized in that** an Si-wafer of 100-orientation or 110-orientation is used for the second substrate wafer, the Si-wafer being provided on one of its sides with a sieve pore membrane mask structure (5) which, within the area of the further extending channel (411, 412), is accompanied by a window corresponding to the channel width, which extends up to the rim of the chip, and the opposite side of the Si-wafer is entirely covered by a protective layer which is etching resistant.

15. The microcolumn reactor according to claim 1, **characterized in that** the membrane (5) is a nanoporous thin-layer membrane, the pore sizes of which are defined in a range between 5 and 500 nm.

## Revendications

1. Réacteur à microcolonnes pour la réalisation de réactions sur des phases solides et/ou avec des cellules biologiques, constitué d'au moins une première et une seconde plaques substrat (1 ; 2) reliées l'une à l'autre par leurs surfaces, au moins l'une des plaques substrat (1 ; 2) comportant au moins un canal (3) longitudinal, dans lequel débouchent, dans une section (a) de sa longueur pouvant être définie, deux ouvertures (41, 42) passant à travers la plaque substrat, **caractérisé en ce que** les ouvertures de passage (41, 42) sont séparées du canal (3) par une membrane semi-perméable (5 ; 50) de type tamis, dont les zones perméables (51) sont dimensionnée de telle sorte qu'elles empêchent, d'une manière pouvant être définie, l'entrée dans les ouvertures de passage (41, 42) de microperles ou de cellules (7) introduites dans le canal (3), et **en ce que** le canal (3) est muni, à l'extérieur de la section (a) définie par les ouvertures de passage (41, 42), d'au moins deux autres ouvertures (61, 62) permettant une introduction et/ou un déplacement par application d'une pression fluidique (p) des microperles ou cellules (7) prévues dans la section (a) et des moyens (91, 92) pour la fermeture temporaire d'au moins l'une des ouvertures de passage (41, 42) et de l'une des ouvertures (61, 62).

2. Réacteur à microcolonnes selon la revendication 1, **caractérisé en ce qu'**il a été choisi un verre pour la première plaque substrat (1) et une tranche de silicium pour la seconde plaque substrat (2), le canal (3) étant ménagé dans la plaque de verre (1) et la surface de la tranche de silicium (2) dirigée vers la plaque de verre étant munie sur toute sa surface d'un revêtement dans lequel est insérée, au moins dans la zone des ouvertures de passage (41, 42), une perforation microstructurée pour la création des zones perméables (51).

3. Réacteur à microcolonnes selon la revendication 1, **caractérisé en ce qu'**il a été choisi une plaque de verre et/ou une plaque d'une matière synthétique pour la première et/ou pour la seconde plaque substrat (1, 2), le canal (3) étant ménagé dans la première plaque substrat (1) et la surface de la seconde plaque substrat (2) dirigée vers la première plaque substrat (1) étant munie sur toute sa surface d'une membrane dans laquelle est insérée, au moins dans la zone des ouvertures de passage (41, 42), une perforation microstructurée pour la création des zones perméables (51).

4. Réacteur à microcolonnes selon la revendication 3, **caractérisé en ce que** la membrane est formée par un film polymère (50) recouvrant la seconde plaque substrat (2).

5. Réacteur à microcolonnes selon la revendication 2, **caractérisé en ce que** la première et la seconde plaques substrat (1, 2) sont reliés par liaison anodique.

6. Réacteur à microcolonnes selon la revendication 2 ou 3, **caractérisé en ce que** la première et la seconde plaques substrat (1, 2) sont reliés, à l'extérieur de la zone du canal (3), par collage.

7. Réacteur à microcolonnes selon la revendication 3, **caractérisé en ce que** la première et la seconde plaques substrat (1, 2) sont reliés par des moyens de serrage externes.

8. Réacteur à microcolonnes selon la revendication 1, 2 ou 3, **caractérisé en ce que** chacune des ouvertures de passage (41, 42) est reliée à un canal (411, 421) situé dans le plan de la seconde plaque substrat (2) et débouchant sur un bord du substrat.

9. Réacteur à microcolonnes selon l'une des revendications précédentes, **caractérisé en ce qu'**un canal (3) est en contact avec plusieurs ouvertures de passage (41, 42), des ouvertures de passage, comprenant chaque fois des ouvertures de passage allant de pair et formant une entrée (i) et une sortie (o), et englobant une distance (a) du canal (3), sont disposées avec des écarts équidistants (b) ou variables différents (c).

10. Réacteur à microcolonnes selon la revendication 9, **caractérisé en ce que**, lorsque plusieurs ouvertures de passage (41, 42) allant de pair sont prévues sur un substrat commun, ou lorsque plusieurs réacteurs à microcolonnes discrets sont mis en circuit fluidique, chaque distance (a ; a1) des ouvertures de passage allant de pair et formant une entrée et une sortie est réalisée avec une longueur différente, adaptée à chaque processus de réaction.

11. Réacteur à microcolonnes selon la revendication 1, **caractérisé en ce que** plusieurs plaques substrat possédant chacune un canal (3) et deux ouvertures de passage (41, 42) sont mise en circuit fluidique, en tant que sous-ensembles séparés, de manière linéaire et/ou sur plusieurs niveaux, d'autres sous-ensembles (8), choisis parmi des détecteurs optiques, des unités d'analyse, des calorimètres, des détecteurs électrochimiques étant prévus à des points de liaison pouvant être définis.

12. Réacteur à microcolonnes selon la revendication 1, **caractérisé en ce que** plusieurs plaques substrat possédant chacune un canal (3) et deux ouvertures de passage (41, 42) sont mise en circuit fluidique, en tant que sous-ensembles séparés, de manière linéaire et/ou sur plusieurs niveaux, d'autres sous-ensembles microstructurés (8), choisis parmi des détecteurs optiques, des unités d'analyse, des calorimètres, des détecteurs électrochimiques étant insérés de manière intégrée dans la disposition générale à des points de liaison pouvant être définis.

13. Réacteur à microcolonnes selon les revendication 1 et 2, **caractérisé en ce que** les ouvertures de passage (41, 42) sont réalisées parallèlement à la normale à la surface (n) sous la forme de deux sections de canal en forme de troncs de pyramide superposés et reliés par leurs petites bases, la seconde plaque substrat (2) étant une tranche de Si(100) munie sur ses deux côtés d'un masque d'incision, dont la première surface de masque est munie de zones perméables (51) au moins au-dessus des deux ouvertures de passage (41, 42) et qui est munie, sur la seconde surface de masque disposée sur la surface opposée de la tranche, d'évidements dont les ouvertures correspondent à la section de passage libre la plus petite des ouvertures de passage (41, 42).

14. Réacteur à microcolonnes selon les revendications 1, 2 et 8, **caractérisé en ce qu'**il est fait appel, pour la seconde plaque substrat (2), à une tranche de Si avec une orientation 100 ou 110, munie d'une part d'une structure de masque de membrane à pores de tamisage (5) accompagnée dans la zone de la continuation du canal (411, 412) d'une fenêtre correspondant à la largeur du canal et allant jusqu'au bord de la tranche, et **en ce que** le côté opposé de la tranche de Si est entièrement recouvert d'une couche de protection résistant à l'incision.

15. Réacteur à microcolonnes selon la revendication 1, **caractérisé en ce que** la membrane (5) est formée par une membrane à couche mince nanoporeuse dont la taille des pores est déterminée dans une plage entre 5 et 500 nm.
